# EUROPEAN PATENT APPLICATION

(11) **EP 4 538 597 A2**
(43) Date of publication of application: **16.04.2025**
(21) Application number: 25161681.9
(22) Date of filing: 04.08.2022
(51) Int. Cl.: F23R 3/28

(54) **FUEL NOZZLE AND SWIRLER ASSEMBLY FOR AN ENGINE**

(30) Priority: 30.12.2021 US 202163294925 P; 11.03.2022 US 202217692411
(62) Divisional of application: 22188903.3
(71) Applicant: General Electric Company, Cincinnati, Ohio 45215 (US)
(72) Inventor: VISE, Steven, 45215 Evendale (US); NAIK, Pradeep, 45215 Evendale (US); VUKANTI, Perumallu, 45215 Evendale (US); BUCARO, Michael, 45215 Evendale (US); PATRA, Ajoy, 45215 Evendale (US); CHIRANTHAN, R Narasimha, 45215 Evendale (US); BENJAMIN, Michael, 45215 Evendale (US); GIRIDHARAN, Manampathy, 45215 Evendale (US); NATH, Hiranya Kumar, 45215 Evendale (US)
(74) Representative: Openshaw & Co.

(57) **Abstract**

An engine (10) can utilize a combustor (14) to combust fuel to drive the engine (10). A fuel nozzle assembly (100) can supply fuel to the combustor (14) for combustion or ignition of the fuel. The fuel nozzle assembly (100) can include a swirler (104) and a fuel nozzle (102) to supply a mixture of fuel and air for combustion. Varying the geometry of the swirler (104) can provide for improved supply of air and control thereof, which can improve efficiency and flame control.

## Description

### FIELD

The present subject matter relates generally to an engine component having one or both of a fuel nozzle and a swirler.

### BACKGROUND

An engine, such as a turbine engine that includes a turbine, is driven by combustion of a combustible fuel within a combustor of the engine. The engine utilizes a fuel nozzle to inject the combustible fuel into the combustor. A swirler provides for mixing the fuel with air in order to achieve efficient combustion.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic cross-sectional view of an engine in accordance with an exemplary embodiment of the present disclosure.
FIG. 2 is a cross section view of a fuel nozzle assembly and swirler of the engine of FIG. 1 including a swirler vane having an axial cutback in accordance with an exemplary embodiment of the present disclosure.
FIG. 3 is cross section view of an alternative fuel nozzle assembly including a swirler with radial vanes in combination with an axial outlet in accordance with an exemplary embodiment of the present disclosure.
FIG. 4 is a side view of a swirler for a fuel nozzle assembly including a forward wall, an aft wall, and vanes extending between the forward and aft walls in accordance with an exemplary embodiment of the present disclosure.
FIG. 5 is a section view taken across section V-V of FIG. 4 in accordance with an exemplary embodiment of the present disclosure.
FIG. 6 is a section view taken across section VI-VI of FIG. 4 in accordance with an exemplary embodiment of the present disclosure.
FIG. 7 is a section view taken across section VII-VII of FIG. 4 in accordance with an exemplary embodiment of the present disclosure.
FIG. 8 is a section view showing an alternative profile for a forward wall and an aft wall for a swirler, including a forward face incline for the forward wall in accordance with an exemplary embodiment of the present disclosure.
FIG. 9 is a section view showing another alternative profile for a forward wall and aft wall for a swirler, including an aft face incline for the aft wall in accordance with an exemplary embodiment of the present disclosure.
FIG. 10 is a section view showing yet another alternative profile for a forward wall and an aft wall for a swirler, including a forward face incline and an aft face incline for the forward wall and the aft wall, respectively in accordance with an exemplary embodiment of the present disclosure.
FIG. 11 is a section view showing an alternative profile for a forward wall and an aft wall for a swirler, defining a converging area and a diverging area for the swirler in accordance with an exemplary embodiment of the present disclosure.
FIG. 12 is a section view of an outlet of a swirler, such as the swirler of FIG. 3, including a set of vanes having a constant cross section extending between a forward wall and an aft wall in accordance with an exemplary embodiment of the present disclosure.
FIG. 13 is a section view of an alternative swirler including a diverging area between the vanes at an outlet extending from the forward wall to an aft wall in accordance with an exemplary embodiment of the present disclosure.
FIG. 14 is a section view of another alternative outlet for a swirler, including a converging area between the vanes at an outlet extending from forward to aft in accordance with an exemplary embodiment of the present disclosure.
FIG. 15 is a section view of yet another alternative outlet for a swirler, including a converging area then a diverging area for an outlet of the vanes extending from the forward wall to the aft wall in accordance with an exemplary embodiment of the present disclosure.
FIG. 16 is a section view of yet another alternative outlet for a swirler, including a diverging area then a converging area for an outlet of vane extending from a forward wall to an aft wall in accordance with an exemplary embodiment of the present disclosure.
FIG. 17 is a section view of another fuel nozzle assembly, including a converging cross-sectional area for an axial passage for a swirler in accordance with an exemplary embodiment of the present disclosure.
FIG. 18 is a section view of yet another fuel nozzle assembly, including a converging cross-sectional area for a swirler, downstream of both swirler vanes and a fuel nozzle in accordance with an exemplary embodiment of the present disclosure.

### DETAILED DESCRIPTION

Aspects of the disclosure herein are directed to a fuel nozzle and swirler architecture located within an engine component, and more specifically to a fuel nozzle structure configured for use with heightened combustion engine temperatures, such as those utilizing a hydrogen fuel other mixes thereof. For purposes of illustration, the present disclosure will be described with respect to a turbine engine for an aircraft with a combustor driving the turbine. It will be understood, however, that aspects of the disclosure herein are not so limited and may have general applicability within an engine, including but not limited to turbojet, turboprop, turboshaft, and turbofan engines, as well as in non-aircraft applications, such as other mobile applications and non-mobile industrial, commercial, and residential applications.

Reference will now be made in detail to the fuel nozzle assembly architecture, portions thereof, or alternative embodiments thereof, and in particular the fuel nozzle and swirler for providing fuel to the combustor located within an engine, examples of which are illustrated in the accompanying drawings as a turbine. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The terms "forward" and "aft" refer to relative positions within an engine or vehicle, and refer to the normal operational attitude of the engine or vehicle. For example, with regard to an engine, forward refers to a position closer to an engine inlet and aft refers to a position closer to an engine nozzle or exhaust.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "flame holding" relates to the condition of continuous combustion of a fuel such that a flame is maintained along or near to a component, and usually a portion of the fuel nozzle and swirler assembly as described herein, and the term "flashback" relate to a retrogression of the combustion flame in the upstream direction.

The term "fluid" may be a gas or a liquid. The term "fluid communication" means that a fluid is capable of making the connection between the areas specified.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

The singular forms "a", "an", and "the" include plural references unless the context clearly dictates otherwise. Furthermore, as used herein, the term "set" or a "set" of elements can be any number of elements, including only one.

Approximating language, as used herein throughout the specification and claims, is applied to modify any quantitative representation that could permissibly vary without resulting in a change in the basic function to which it is related. Accordingly, a value modified by a term or terms, such as "about", "approximately", "generally", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values. Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

The combustor introduces fuel from a fuel nozzle, which is mixed with air by a swirler, and then combusted within the combustor to drive the engine. Increases in efficiency and reduction in emissions have driven the need to use fuel that burns cleaner and at higher temperatures. There is a need to improve durability of the combustor under these operating parameters, such as improved flame control to prevent flame holding on the fuel nozzle and swirler components.

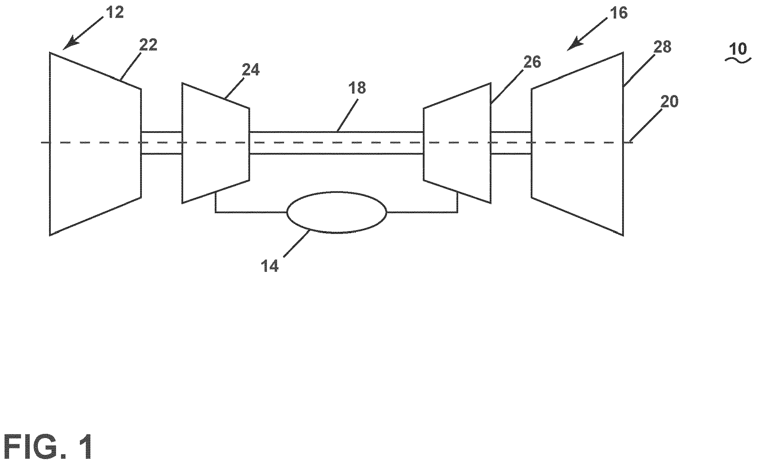

FIG. 1 is a schematic view of an engine 10. As a non-limiting example, the engine 10 can be used within an aircraft. The engine 10 can include, at least, a compressor section 12, a combustion section 14, and a turbine section 16. A drive shaft 18 rotationally couples the compressor and turbine sections 12, 16, such that rotation of one affects the rotation of the other, and defines a rotational axis 20 for the engine 10.

The compressor section 12 can include a low-pressure (LP) compressor 22, and a high-pressure (HP) compressor 24 serially fluidly coupled to one another. The turbine section 16 can include an LP turbine 28, and an HP turbine 26 serially fluidly coupled to one another. The drive shaft 18 can operatively couple the LP compressor 22, the HP compressor 24, the LP turbine 28 and the HP turbine 26 together. Alternatively, the drive shaft 18 can include an LP drive shaft (not illustrated) and an HP drive shaft (not illustrated). The LP drive shaft can couple the LP compressor 22 to the LP turbine 28, and the HP drive shaft can couple the HP compressor 24 to the HP turbine 26. An LP spool can be defined as the combination of the LP compressor 22, the LP turbine 28, and the LP drive shaft such that the rotation of the LP turbine 28 can apply a driving force to the LP drive shaft, which in turn can rotate the LP compressor 22. An HP spool can be defined as the combination of the HP compressor 24, the HP turbine 26, and the HP drive shaft such that the rotation of the HP turbine 26 can apply a driving force to the HP drive shaft which in turn can rotate the HP compressor 24.

The compressor section 12 can include a plurality of axially spaced stages. Each stage includes a set of circumferentially-spaced rotating blades and a set of circumferentially-spaced stationary vanes. The compressor blades for a stage of the compressor section 12 can be mounted to a disk, which is mounted to the drive shaft 18. Each set of blades for a given stage can have its own disk. The vanes of the compressor section 12 can be mounted to a casing which can extend circumferentially about the engine 10. It will be appreciated that the representation of the compressor section 12 is merely schematic and that there can be any number of stages. Further, it is contemplated, that there can be any other number of components within the compressor section 12.

Similar to the compressor section 12, the turbine section 16 can include a plurality of axially spaced stages, with each stage having a set of circumferentially-spaced, rotating blades and a set of circumferentially-spaced, stationary vanes. The blades for a stage of the turbine section 16 can be mounted to a disk which is mounted to the drive shaft 18. Each set of blades for a given stage can have its own disk. The vanes of the turbine section can be mounted to the casing in a circumferential manner. It is noted that there can be any number of blades, vanes and stages as the illustrated turbine section is merely a schematic representation. Further, it is contemplated, that there can be any other number of components within the turbine section 16.

The combustion section 14 can be provided serially between the compressor section 12 and the turbine section 16. The combustion section 14 can be fluidly coupled to at least a portion of the compressor section 12 and the turbine section 16 such that the combustion section 14 at least partially fluidly couples the compressor section 12 to the turbine section 16. As a non-limiting example, the combustion section 14 can be fluidly coupled to the HP compressor 24 at an upstream end of the combustion section 14 and to the HP turbine 26 at a downstream end of the combustion section 14.

During operation of the engine 10, ambient or atmospheric air is drawn into the compressor section 12 via a fan (not illustrated) upstream of the compressor section 12, where the air is compressed defining a pressurized air. The pressurized air can then flow into the combustion section 14 where the pressurized air is mixed with fuel and ignited, thereby generating combustion gases. Some work is extracted from these combustion gases by the HP turbine 26, which drives the HP compressor 24. The combustion gases are discharged into the LP turbine 28, which extracts additional work to drive the LP compressor 22, and the exhaust gas is ultimately discharged from the engine 10 via an exhaust section (not illustrated) downstream of the turbine section 16. The driving of the LP turbine 28 drives the LP spool to rotate the fan (not illustrated) and the LP compressor 22. The pressurized air and the combustion gases can together define a working airflow that flows through the fan, compressor section 12, combustion section 14, and turbine section 16 of the engine 10.

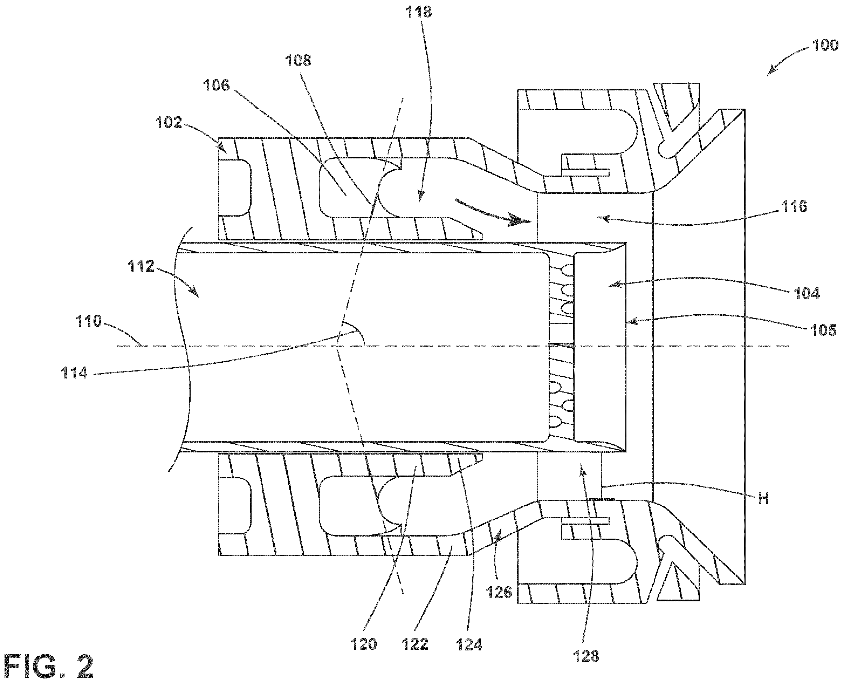

FIG. 2 shows a fuel nozzle assembly 100 including a swirler 102 and a fuel nozzle 104 terminating at a nozzle tip 105, including a fuel passage 112 defining a longitudinal axis 110, and provided at least partially interior of the swirler 102. The swirler 102 includes a set of vanes 106 that impart a swirl as a helical or tangential component to an airflow passing along the vanes 106. The swirling air is directed through an exhaust passage 118 with the air exhausting at an outlet 116. The vanes 106 includes a leading edge (not shown) and a trailing edge 108, and extend between a radially-inner wall 120 and a radially-outer wall 122 defining the exhaust passage 118 therebetween. The trailing edge 108 can be cut back at a cutback angle 114 relative to the longitudinal axis 110 defined through the fuel nozzle 104. In another non-limiting example, the trailing edge cutback angle 114 can be relative to the engine centerline 20 of FIG. 1. The cutback angle 114 can be between 0-degrees and 90-degrees, or can be between 30-degrees and 90-degrees in another non-limiting example, or any other non-zero angle, while other angles or ranges thereof are contemplated.

In operation, a flow of air can be provided by the swirler 102, imparted with a tangential swirling component passing axially about the fuel nozzle 104. The vanes 106 impart a swirl, or tangential or helical component, to the air, such that the air swirls as it is emitted from the swirler 102. The cutback angle 114 for the trailing edge 108 creates a higher angular component to the airflow at an outer diameter of the exhaust passage 118, defining a lower angular component nearer to an inner diameter of the exhaust passage 118, relative to the outer diameter. Additionally, the cutback angle 114 creates a high axial velocity component nearer to the inner diameter of the exhaust passage 118, while having a relatively lesser axial velocity component nearer to the outer diameter. The higher swirl component at the outer diameter prevents or reduces flame holding on the fuel nozzle assembly 100, while the higher axial velocity component at the inner diameter prevents flame holding and flashback on the outer surface or end of the fuel nozzle 104. In one non-limiting example, it is contemplated that the vanes 106 or the swirler 102 can be part of or integral with the fuel nozzle 104, as a unitary component. The cutback angle 114 can start at any radial vane location, relative to the longitudinal axis 110, and it is contemplated that the cutback angle 114 can increase extending toward the inner diameter of the swirler 102, such that the trailing edge 108 is curved. In another example, the cutback angle 114 can start at any location between 0%-90% of the passage height between the radially-inner and radially-outer walls 120, 122, where 100% is aligned with the radially outer wall 122 in the radial direction, and 0% is aligned with the radially-inner wall 120.

Additionally, the nozzle tip 105 can be positioned aft of swirler 102. Such an aft positioning can provide sufficient space for the wake of the airflow provided from the swirler 102 to mix, aft of the swirler 102 and the fuel nozzle 104, which provides to reduce or eliminate flame holding and flashback at the nozzle tip 105.

A foot 124 of the radially inner wall 120 directs the air to slide along the foot 124 and transitioning to along the outer diameter of the fuel nozzle 104 to significantly reduce wakes at aft edge of the radially inner wall 120. The angle on the foot 124 can be defined from 5-degress to 60-degrees with respect to the longitudinal axis 110 or an axis parallel thereto, to control flow velocity on the outer diameter of the fuel nozzle 104, as well as reduce wakes the aft edge of the radially inner wall 120. The radially outer wall 122 includes a converging wall section 126 to direct the flow towards the fuel nozzle 104 to create high velocity on the fuel nozzle outer diameter to avoid flame holding. The angle for the converging wall section 126 can be between 1-degree and 80-degrees, or 2-degrees and 80-degrees, relative to the longitudinal axis 110, while other ranges are contemplated such as any non-zero angle. Convergence of the swirler passage area defined by the foot 124 and the converging wall section 126 is followed by a constant area section 128 to create a well developed velocity profile at the outlet 116 of the exhaust passage 118 to keep the flame away from fuel nozzle assembly 100. The length of the constant area section 128 can be from 0.3 H to 8.0 H, where H is the height of the exhaust passage 118 defined between radially-outer wall 122 and fuel nozzle 104 located aft of the foot 124 and the converging wall section 126. The tip of the fuel nozzle 104 can be positioned anywhere in constant area section 128 or converging wall section 126 of the swirler assembly downstream of the swirler vanes 106.

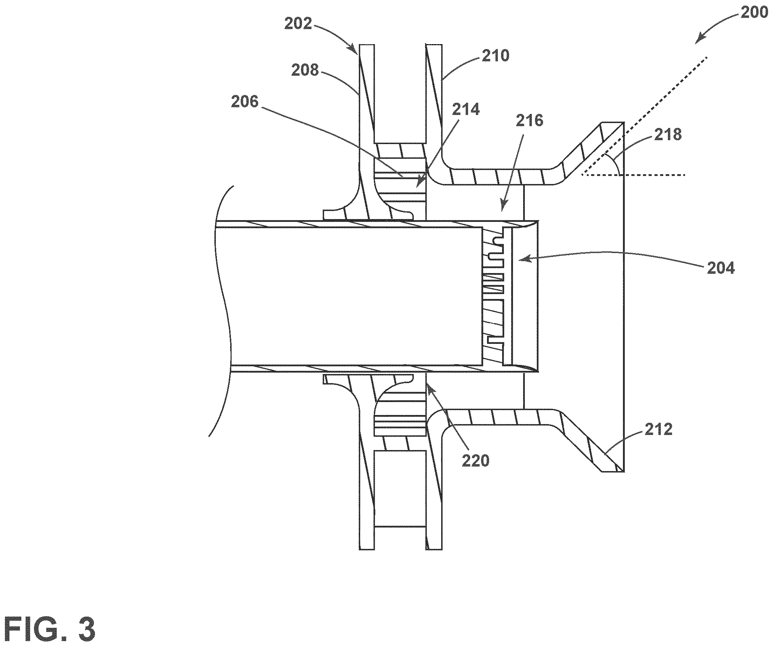

Turning to FIG. 3, another exemplary fuel nozzle assembly 200 includes a swirler 202 and a fuel nozzle 204. The swirler 202 includes a set of circumferentially arranged radial vanes 206 provided between a front wall 208 and a rear wall 210. The swirler 202 turns airflow from a radial direction at the radial vanes 206 to an axial direction at an axial passage 216 that circumscribes the fuel nozzle 204. A flare cone 212 extends from the swirler 202 downstream of the axial passage 216. In one example, the flare cone 212 can extend at an angle 218 between -60-degrees (negative 60-degrees) to 80-degrees, relative to the longitudinal axis of the fuel nozzle 204, where a negative angle defines a converging cross-sectional area, and a positive angle defines a diverging cross-sectional area, and zero-degrees represents a constant cross section for the flare cone 212. In alternative examples, it is contemplated that the flare cone 212 can include a constant, diverging, or converging cross-sectional area, and need not be limited as shown. In another alternative example, it is contemplated that no flare is included.

The radial vanes 206 can be arranged to introduce a radial flow into the swirler 202 which exhausts at a trailing edge 220 at an opening 214, sometimes referred to as a nozzle between adjacent radial vanes 206, defining an outlet for the nozzle. The openings 214 can be oriented tangentially to impart a swirl to the flow of air provided from the swirler 202. The tangential openings 214 create a high velocity component for the airflow along the axial direction along the outer diameter of the axial passage 216, which prevents flame holding against the flare cone 212. Additionally, the tangential openings 214 provide a high velocity component along the inner diameter of the axial passage 216, which prevents flame holding or flashback at the fuel nozzle 204.

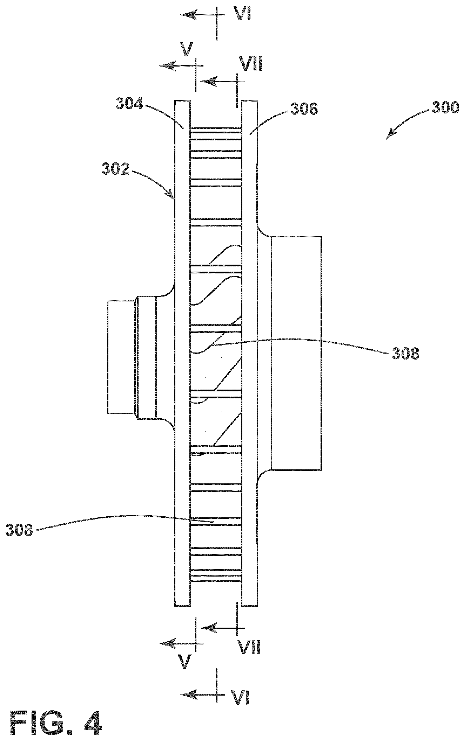

Turning to FIG. 4, a swirler 300 for a fuel nozzle assembly, such as the fuel nozzle assemblies as described herein, includes a housing 302 having a forward wall 304 and an aft wall 306. A set of vanes 308 extend between the forward wall 304 and the art wall 306 for imparting a tangential swirl to an airflow provided to a fuel nozzle assembly.

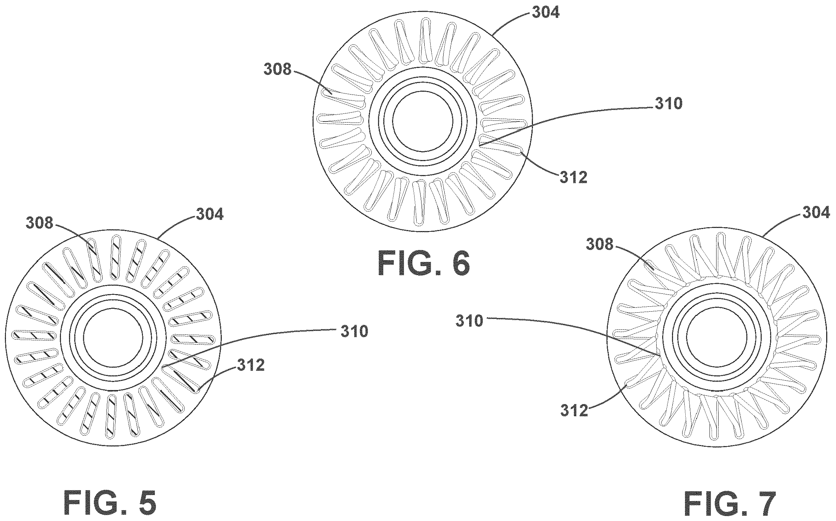

Turning to FIG. 5, taken along section V-V of FIG. 4, near the forward wall 304, showing vanes 308 that have a radial arrangement relative to the annular forward wall 304. FIG. 6 shows a section view taken along section VI-VI of FIG. 4, which illustrates the vanes 308 located between the forward wall 304 and the aft wall 306 (see FIG. 4, aft wall 306 not shown in FIGS. 5-7), showing the vanes 308 turning from a radial direction toward a tangential direction, with a trailing edge 310 of each vane 308 turning tangentially. FIG. 7 shows a cross-sectional view taken along section VII-VII of FIG. 4, which shows a section near to the aft wall 306 showing the trailing edge 310 of the vanes 308 turned further tangentially, while less tangentially extending toward a leading edge 312, comparatively with the trailing edge 310. The vanes 308, as shown as radial in section V-V, are arranged along a radius extending from the center of the swirler, before turning to radial, as shown in FIGS. 6 and 7. The axial position where the vanes 308 begin to turn from radial to axial can vary between 0% to 80% of the total vane height, where the vane height is defined between the forward and aft walls 304, 306 of the swirler 300.

As the vanes 308 turn tangentially along the trailing edge 310, an airflow directed along the vanes 308 provides for peak airflow velocity before interacting with the fuel flow provided by a fuel nozzle. The tangential curve for the trailing edge 310 can provide a high tangential velocity component along the outer diameter of an axial swirler passage downstream from the swirler 300, which prevents flame holding on the fuel nozzle assembly or a downstream flare cone. The forward radial component of the vanes 308, defined by the geometry as shown in section V-V in FIG. 5, does not have a tangential component of velocity for the flow, and creates high axial velocity as the flow turns towards a fuel nozzle. This high axial velocity created by forward radial component of the vanes 308 results in high axial velocity at the aft end of the fuel nozzle, preventing flame holding on the tip of the fuel nozzle.

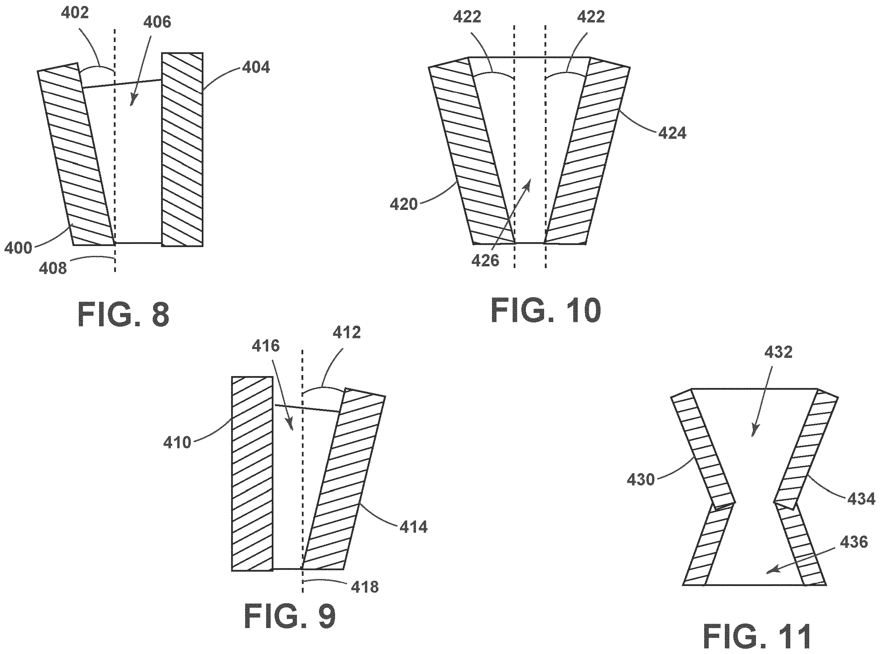

FIG. 4 shows the forward wall 304 and the aft wall 306 that are aligned parallel to one another, or orthogonal to a longitudinal axis for the fuel nozzle, or both. FIGS. 8-11, show non-limiting alternative examples, which can be utilized to vary the velocity profile for the airflow provided by a swirler. FIG. 8 shows a forward wall 400 that includes an incline which can be defined by an incline angle 402, defined relative to an aft wall 404, or a radius 408 extending from a longitudinal axis of the fuel nozzle and swirler assembly, or the forward wall 400 can be defined non-orthogonal to the longitudinal extent of a fuel nozzle utilized with the swirler including the forward wall 400. Similarly, FIG. 9 shows an aft wall 414 that includes an incline defined by an incline angle 412, relative to a radius 418 or a forward wall 410. The forward or aft incline of FIGS. 8 or 9 can define a converging cross-sectional area 406, 416 for a swirler, which can provide for increasing velocity for the airflow passing through the swirler, controlling where the local velocity profile can increase or decrease based upon the angle or incline of the wall, which can improve the velocity profile for the airflow and reduce or prevent flame holding at the fuel nozzle assembly. As the passage between forward wall 410 and aft wall 414 is varied, a span of vanes provided in the swirler between the forward and aft walls 410, 414 can reduce in the aft direction, which helps to achieve desired velocity profile as the air flow exits the vanes. The incline angle 402, 412 can be between 0-degrees and 45-degrees, while other ranges are contemplated

In another example, FIG. 10 shows a forward wall 420 and an aft wall 424 that are both inclined at an incline angle 422, being offset from orthogonal, relative to the longitudinal extent of a fuel nozzle or an engine centerline, in non-limiting examples. The inclined forward and aft walls 420, 424 of also provide a converging cross-sectional area 426 to provide an increased velocity for the airflow provided by a swirler. The incline angle 422 can be from 0-degrees to 45-degrees, for example.

FIG. 11 shows another example that includes a forward wall 430 and an aft wall 434 that both converge, defining a decreasing cross-sectional area 432, transitioning to diverging portions of the forward wall 430 and aft wall 434, defining a diverging cross-sectional area 436. Instead of a planar surface it is possible that the forward and aft walls 430, 434 can be curved. Radial height of the passage at which transitioning between converging to diverging area occurs can be between 20% to 80% of the total radial height of the swirler passage, for example.

It should be appreciated that additional combinations exist, where the forward wall or the aft wall include an incline or a decline, or a curvature for the wall, either concave or convex, that defines an increasing or decreasing cross-sectional area, or any combination thereof among both the forward wall and the aft wall individually, irrespective of the other wall or in complement with the other wall. It should be appreciated that the forward and aft walls for a swirler can be angled, individually or together, or in complement. Additionally, each wall can be angled, non-angled, or curved discretely to define converging or diverging portions for the swirler, which can define complex airflow profiles for a swirler.

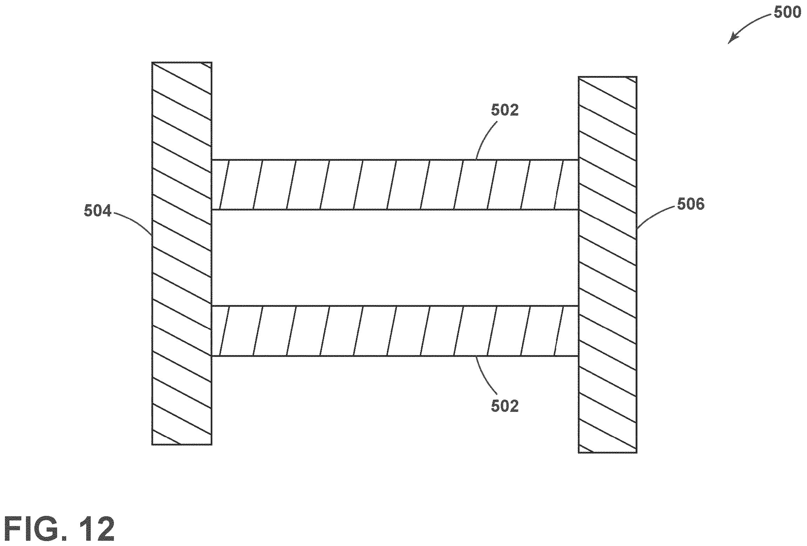

FIG. 12 shows an enlarged, section view of a portion of an exemplary swirler 500 including two vanes 502 extending between a forward wall 504 and an aft wall 506. Each vane 502 can include a constant cross-sectional area extending between the forward wall 504 and the aft wall 506.

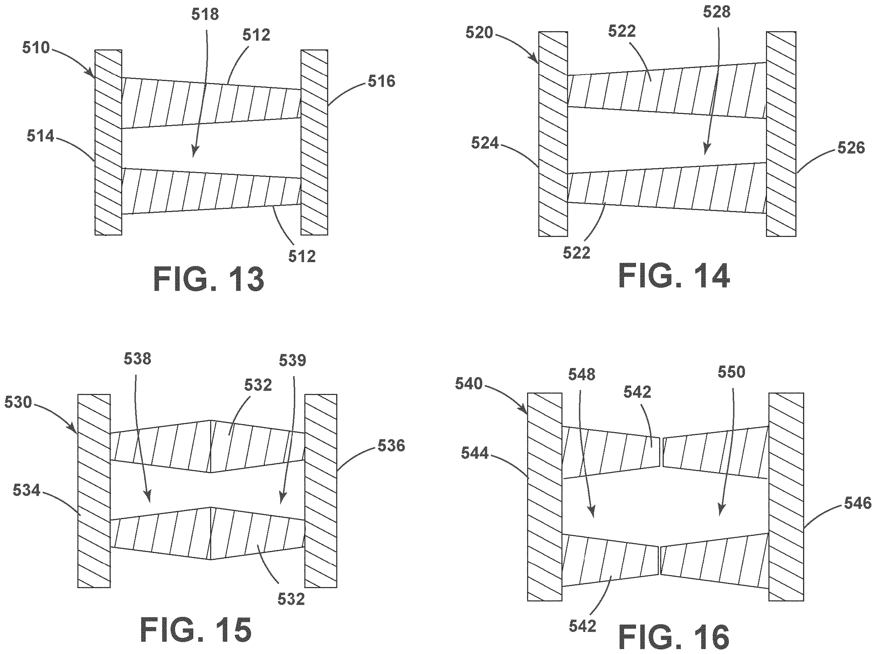

FIGS. 13-16 illustrate alternative examples for the cross-sectional profile for a swirler with vanes defined between forward and aft walls. FIG. 13 illustrates a swirler 510 with vanes 512 that include an increasing cross-sectional flow area 518 extending in a direction from a forward wall 514 to an aft wall 516, or a decreasing vane thickness extending from the forward wall 514 to the aft wall 516. This geometry creates lower flow area at the forward wall 514 and relatively higher flow area at the aft wall 516 of the vane passage which results in high velocity on the outer diameter of an axial swirler passage, such as that described in FIG. 3, and relatively lower velocity in the axial swirler passage on the fuel nozzle outer diameter. In other words, the geometry creates a peak velocity profile at a radial exterior of the axial swirler passage. A high velocity flow on the outer diameter of the swirler or flare cone prevents flame holding on the flare cone.

FIG. 14 illustrates a swirler 520 with vanes 522 that include a decreasing cross-sectional flow area 528 or an increasing vane thickness, extending from a forward wall 524 to an aft wall 526. This geometry creates an peak radially-inner velocity profile at the axial swirler passage. A high velocity component on the outer diameter of the fuel nozzle reduces or eliminates flame holding on the fuel nozzle.

FIG. 15 includes a swirler 530 with vanes 532 that include a profile that includes a decreasing cross-sectional flow area 538 and then an increasing cross-sectional flow area 539 or an increasing vane thickness transitioning to a decreasing vane thickness, extending between a forward wall 534 and an aft wall 536. This geometry creates a dual peak velocity profile with peak velocities on both the inner diameter and the outer diameter of swirler axial passage. This creates a high velocity flow near both flare cone and fuel nozzle wall preventing flame holding on both surfaces.

FIG. 16 includes a swirler 540 with vanes 542 that include an increasing cross-sectional flow area 548 which transitions to a decreasing cross-sectional flow area 550, or an increasing vane thickness transitioning to a decreasing vane thickness, extending from a forward wall 544 to an aft wall 546. This geometry creates center peak velocity profile at swirler axial passage that prevents flame holding or flashback in the center of the swirler axial passage. Transitioning of the vane thickness can occur anywhere from 20% to 80% of the length defined from forward wall 544 to aft wall 546 of the radial swirler passage. It is possible that the vane surface can be curved surfaces instead of a planar surface or combinations thereof are possible. A decreasing or converging cross-sectional area can be utilized to accelerate the flow, while the increasing or diverging cross-sectional area can be utilized to decelerate the flow, which can be directed to the inner or outer diameters of the swirler axial passage in order to reduce the occurrence of flame holding on the fuel nozzle assembly. Additionally, while the cross-sectional view is shown nearer to an exit arrangement for a swirler assembly, it should be appreciated that the cross-section can be defined anywhere between the leading edge and the trailing edge of the particular vane, and it is further contemplated that such cross-sectional variation can occur in the direction extending from a leading edge to a trailing edge, as opposed to or in complement with the variation extending between the forward and aft walls 544, 546.

A variable profile for the vanes extending between a forward and an aft wall can provide for defining different velocity profiles for the swirling air emitted from the swirler. The variable velocity profiles can be utilized to prevent flame holding against portions of the fuel nozzle assembly, and the profiles can be utilized to develop complex flow profiles to prevent flame holding. Furthermore, different velocity profiles can be used to control mixing of fuel and air in the fuel nozzle assembly, as well as in the primary zone of the downstream combustor.

In another example, it is contemplated that the vanes, such as those shown in FIGS. 12-16, can include a varying cross-sectional in the radial direction, being orthogonal to a direction extending between the forward wall and the aft wall. In this way, similar to that disclosed in the axial direction, the vane can converge, diverge, remain constant, or any combination thereof in the radial direction. Further yet, it is contemplated that the vanes can include a varying cross section in both the radial and the axial direction. For example, a vane can be converging from the forward wall to the aft wall, in the axial direction, while that same vane can be diverging in the radial direction, orthogonal to the axial direction. In this way, it should be appreciated that the profile for the vane can be used to determine or define a velocity profile, which can be tailored to the fuel nozzle assembly, or the particular fuel type, which can be used to reduce or eliminate flame holding or flashback, as well as mixing fuel and air to increase efficiency.

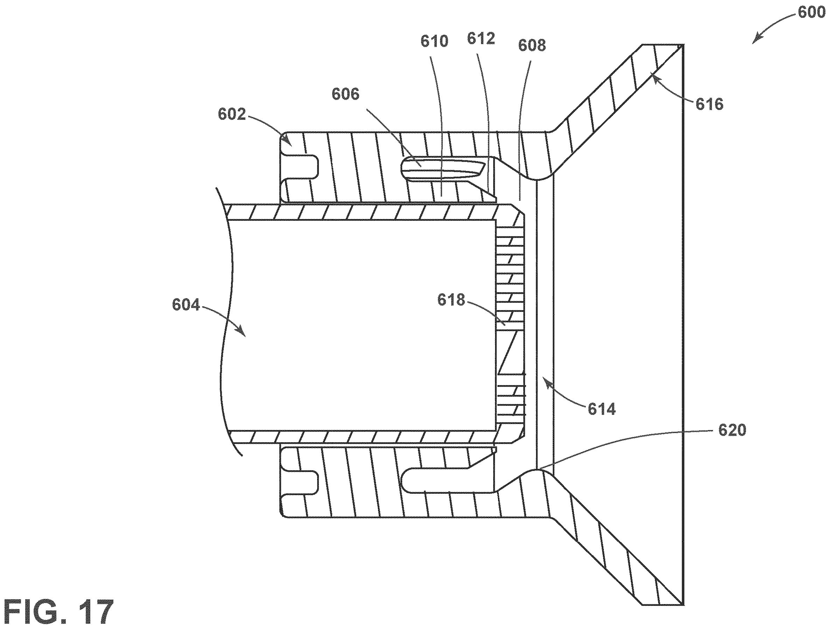

FIG. 17 shows a fuel nozzle assembly 600 with a swirler 602 circumscribing a fuel nozzle 604. The swirler 602 includes an axial passage 606 that exhausts about the fuel nozzle 604. The axial passage 606 can include a converging portion 608. The axial passage 606 can be spaced from the fuel nozzle 604 by a swirler wall 610. The swirler wall 610 can include an angled portion 612 which defines the converging portion 608. The converging portion 608 provides for increasing the velocity for the swirler air exhausted from the axial passage 606, which prevents flame holding on the fuel nozzle assembly 600. A throat 614 is defined in the passage downstream of the fuel nozzle 604 and upstream of a flare cone 616 where the flow is accelerated to prevent the flame from flashing back on the fuel nozzle 604. The location of the throat 614 from the fuel nozzle 604 can be from 0D to 30D where D is the diameter of a fuel orifice hole 618 at the end of the fuel nozzle 604, and in one example, D can be the diameter of the smallest fuel orifice hole.

A protuberance 620 can be formed in the swirler 602. The protuberance can be rounded or linear, or combinations thereof, while any suitable shape is contemplated. The protuberance 620 defines a converging cross-section downstream of the angled portion 612, which can define throat 614 as the smallest cross-sectional area for the fuel nozzle assembly 600 downstream of the fuel nozzle 604 and upstream of the flare cone 616. The protuberance 620 can be positioned downstream from the fuel nozzle 604 by between 0D and 30D, where D is the diameter of the fuel orifice hole 618, and here 0D is aligned with the end of the fuel nozzle.

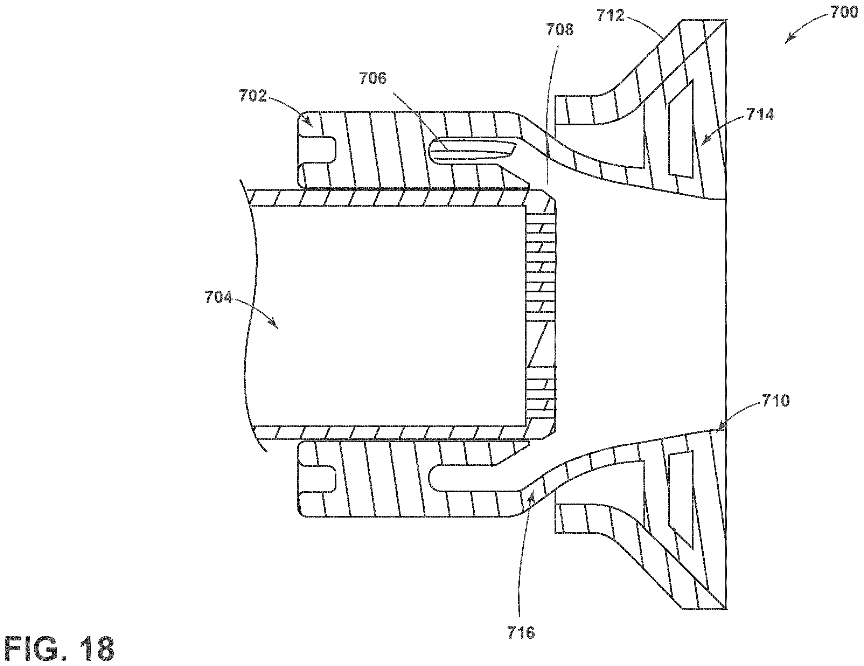

FIG. 18 includes a fuel nozzle assembly 700 with a swirler 702 circumscribing a fuel nozzle 704. The swirler 702 includes an axial passage 706, which includes a converging portion 708 defining a converging section exhausting about the fuel nozzle 704. The swirler 702 includes a downstream housing portion 716 extending aft of the fuel nozzle 704, defining a truncated nozzle 710 encasing a mix of air from the swirler 702 and fuel from the fuel nozzle 704. The truncated nozzle 710 provides for additional space between the truncated nozzle 710 and an exterior flare cone 712, which provides space for an acoustic damper 714 between the truncated nozzle 710 and the flare cone 712. The converging cross-sectional area defined by the truncated nozzle 710 accelerates the flow of the fuel and air emitted from the fuel nozzle 704 and the swirler 702 to prevent flame holding or flashback, while the damper 714 can be utilized to reduce vibration generated by the fuel nozzle assembly 200, providing further flame control to prevent flame holding or flashback. In this way, the damper 714 can be an acoustic damper, which can dampen the sound generated by the engine for quieter operation, as well as reducing or absorbing vibrational energy with the flare cone 712 and damper 714. The damper volume can be the same or different for different fuel nozzle assemblies 700 in annular arrangement about a combustor, to address broader range of combustion dynamic frequencies. It is possible that there can be partitioning of volume within each individual damper volume placed around swirler 702, where discrete volumes can be tuned to particular frequencies. The damper 714 can be extended above flare cone 712 into the combustion chamber.

It should be appreciated that the flare can be made as diverging, constant, or converging in the flow direction, which can prevent flame holding or flashback, as well as expand the mixture of fuel and air, which can improve efficiency and reduce emissions. In another example, it is contemplated that there is no flare.

It should be appreciated that fuels with higher burn temperature and higher burn speeds, or lighter weights relative to air or other fuels, can provide for reducing or eliminating emissions, or improving efficiency without increasing emissions. In one example, hydrogen fuels or hydrogen-based fuels can be utilized, which can eliminate carbon emissions without negative impact to efficiency. Such fuels, including hydrogen, require greater flame control, in order to prevent flame holding or flashback on the combustor hardware. The aspects described herein can increase combustor durability, while current combustors can fail to provide durability to utilize such fuels.

As will be appreciated from the description herein, the aspects can be interchanged or mixed, and that the disclosure is not limited to the embodiments described herein. A person having ordinary skill in the art would recognize that the aspects described herein can be interchanged, combined, added, or otherwise mixed to form additional embodiments.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects are provided by the subject matter of the following clauses.

A turbine engine comprising: a compressor section, combustor section, and turbine section in serial flow arrangement, with the combustor section including a fuel nozzle assembly comprising: a fuel nozzle defining a fuel passage, which defines a longitudinal axis; a swirler circumscribing the fuel nozzle having a vane provided in the swirler configured to impart a tangential component to a supply of air provided through the swirler, the vane including a leading edge and a trailing edge; wherein the trailing edge is arranged at a cut back angle relative to the longitudinal axis.

The turbine engine of any preceding clause, wherein the swirler further includes a radially-inner wall and a radially-outer wall defining an exhaust passage.

The turbine engine of any preceding clause, wherein the radially-inner wall includes a foot.

The turbine engine of any preceding clause, wherein the radially-outer wall includes a converging section.

The turbine engine of any preceding clause, wherein the converging section is at least partially aligned with the foot in a direction orthogonal to the longitudinal axis.

The turbine engine of any preceding clause, wherein the cutback angle is less than 90-degrees and non-zero.

The turbine engine of any preceding clause, wherein the fuel nozzle terminates aft of the swirler.

A fuel nozzle and swirler assembly for an engine, the fuel nozzle and swirler assembly comprising: a fuel nozzle including a fuel passage defining a longitudinal axis; and a swirler circumscribing the fuel nozzle, the swirler comprising: a forward wall, an aft wall spaced from the forward wall to define a swirler passage therebetween, and a set of vanes, provided in the swirler passage extending between the forward wall and the aft wall, the set of vanes configured to impart a tangential component to a volume of fluid passing through the swirler, wherein each vane of the set of vanes turns from a radial orientation at the forward wall to a tangential orientation at the aft wall.

The fuel nozzle and swirler assembly of any preceding clause, wherein the forward wall is arranged at an angle offset from an axis defined orthogonal to the longitudinal axis.

The fuel nozzle and swirler assembly of any preceding clause, wherein the radial orientation is defined in a radial direction orthogonal to the longitudinal axis.

The fuel nozzle and swirler assembly of any preceding clause, wherein the tangential orientation is in a direction tangent to the radial direction.

A fuel nozzle and swirler assembly for an engine, the fuel nozzle and swirler assembly comprising: a fuel nozzle including a fuel passage defining a longitudinal axis; and a swirler circumscribing the fuel nozzle, the swirler comprising: a forward wall, an aft wall spaced from the forward wall to define a swirler passage therebetween, and a set of vanes provided in the swirler passage extending between the forward wall and the aft wall, with each vane of the set of vanes including a trailing edge, the set of vanes for imparting a tangential component to a volume of fluid passing through the swirler; wherein the trailing edge is arranged at a cut back angle relative to the longitudinal axis.

The fuel nozzle and swirler assembly of any preceding clause wherein one of the forward wall and the aft wall are arranged at an incline angle, wherein the incline angle is defined relative to a radius extending orthogonal to the longitudinal axis.

The fuel nozzle and swirler assembly of any preceding clause wherein the incline angle defines a converging cross-sectional area in a flow direction through the swirler.

The fuel nozzle and swirler assembly of any preceding clause further comprising a diverging cross-sectional area downstream of the converging cross-sectional area relative to the flow direction through the swirler.

The fuel nozzle and swirler assembly of any preceding clause further comprising a diverging cross-sectional area upstream of the converging cross-sectional area in the flow direction.

A fuel nozzle and swirler assembly for an engine, the fuel nozzle and swirler assembly comprising: a fuel nozzle including a fuel passage defining a longitudinal axis; a swirler circumscribing the fuel nozzle, and including a forward wall, an aft wall spaced from the forward wall to define a swirler passage therebetween; and a set of vanes provided in the swirler passage extending between the forward wall and the aft wall, with each vane of the set of vanes extending between a leading edge and a trailing edge; wherein the trailing edge for each vane of the set of vanes is arranged at a cut back angle relative to the longitudinal axis

The fuel nozzle and swirler assembly of any preceding clause wherein the set of vanes defines at least one of an increasing cross-sectional flow area or a decreasing cross-sectional flow area.

The fuel nozzle and swirler assembly of any preceding clause wherein the set of vanes include the increasing cross-sectional flow area or the decreasing cross-sectional flow area in a direction extending from the forward wall to the aft wall.

The fuel nozzle and swirler assembly of any preceding clause wherein the set of vanes include the increasing cross-sectional flow area or the decreasing cross-sectional area in a radial direction orthogonal to the direction extending from the forward wall to the aft wall.

The fuel nozzle and swirler assembly of any preceding clause wherein the set of vanes define both the increasing cross-sectional flow area and the decreasing cross-sectional flow area.

The fuel nozzle and swirler assembly of any preceding clause wherein the increasing cross-sectional flow area is provided adjacent the forward wall and the decreasing cross-sectional flow area is provided adjacent the aft wall.

The fuel nozzle and swirler assembly of any preceding clause wherein the swirler further comprises a converging portion arranged downstream of the set of vanes.

The fuel nozzle and swirler assembly of any preceding clause further comprising a protuberance provided downstream of the converging portion.

The fuel nozzle and swirler assembly of any preceding clause further comprising a damper arranged radially exterior of the converging portion.

A fuel nozzle and swirler assembly for an engine, the fuel nozzle and swirler assembly comprising: a fuel nozzle including a fuel passage defining a longitudinal axis; a swirler circumscribing the fuel nozzle, and including a forward wall, an aft wall spaced from the forward wall to define a swirler passage therebetween; and a set of vanes provided in the swirler passage extending between the forward wall and the aft wall, with each vane of the set of vanes extending between a leading edge and a trailing edge; wherein the set of vanes defines at least one of an increasing cross-sectional flow area or a decreasing cross-sectional flow area.

The fuel nozzle and swirler assembly of any preceding clause, wherein the set of vanes include the increasing cross-sectional flow area or the decreasing cross-sectional flow area in a direction extending from the forward wall to the aft wall.

The fuel nozzle and swirler assembly of any preceding clause, wherein the set of vanes include the increasing cross-sectional flow area or the decreasing cross-sectional area in a radial direction orthogonal to the direction extending from the forward wall to the aft wall.

The fuel nozzle and swirler assembly of any preceding clause, wherein the set of vanes define both the increasing cross-sectional flow area and the decreasing cross-sectional flow area.

The fuel nozzle and swirler assembly of any preceding clause, wherein the increasing cross-sectional flow area is provided adjacent the forward wall and the decreasing cross-sectional flow area is provided adjacent the aft wall.

The fuel nozzle and swirler assembly of any preceding clause, wherein the swirler further comprises a converging portion arranged downstream of the set of vanes.

The fuel nozzle and swirler assembly of any preceding clause, further comprising a protuberance provided downstream of the converging portion.

The fuel nozzle and swirler assembly of any preceding clause, further comprising a damper arranged radially exterior of the converging portion.

A fuel nozzle and swirler assembly for an engine, the fuel nozzle and swirler assembly comprising: a fuel nozzle including a fuel passage defining a longitudinal axis; and a swirler circumscribing the fuel nozzle, the swirler comprising: a forward wall, an aft wall spaced from the forward wall to define a swirler passage therebetween, and a set of vanes provided in the swirler passage extending between the forward wall and the aft wall, for imparting a tangential component to a volume of fluid passing through the swirler; wherein at least one of the forward wall and the aft wall is arranged at an incline angle relative to a radius defined orthogonal to the longitudinal axis.

The fuel nozzle and swirler assembly of any preceding clause, wherein both the forward wall and the aft wall are arranged at the incline angle.

The fuel nozzle and swirler assembly of any preceding clause, wherein the incline angle defines a converging cross-sectional area in a flow direction through the swirler.

The fuel nozzle and swirler assembly of any preceding clause, further comprising a diverging cross-sectional area downstream of the converging cross-sectional area relative to the flow direction through the swirler.

The fuel nozzle and swirler assembly of any preceding clause, further comprising a diverging cross-sectional area upstream of the converging cross-sectional area in the flow direction.

A turbine engine comprising: a compressor section, combustor section, and turbine section in serial flow arrangement, with the combustor section including a fuel nozzle assembly comprising: a fuel nozzle defining a fuel passage, which defines a longitudinal axis; a swirler circumscribing the fuel nozzle having a vane provided in the swirler configured to impart a tangential component to a supply of air provided through the swirler, the vane including a trailing edge; wherein the trailing edge is arranged at a cut back angle relative to the longitudinal axis.

The turbine engine of any preceding clause, wherein the swirler further includes a radially inner wall and a radially outer wall defining an exhaust passage.

The turbine engine of any preceding clause, wherein the radially inner wall includes a foot.

The turbine engine of any preceding clause, wherein the radially outer wall includes a converging section.

The turbine engine of any preceding clause, wherein the converging section is at least partially aligned with the foot in a direction orthogonal to the longitudinal axis.

The turbine engine of any preceding clause, wherein the cutback angle is less than 90-degrees and is non-zero.

The turbine engine of any preceding clause, wherein the fuel nozzle terminates aft of the swirler.

## Claims

1. A turbine engine (10) comprising:
a compressor section (12), combustor section (14), and turbine section (16) in serial flow arrangement, with the combustor section (14) including a fuel nozzle assembly (100) comprising:
a fuel nozzle (104) defining a fuel passage (112), which defines a longitudinal axis (110);
a swirler (102) circumscribing the fuel nozzle (104) having a vane (106) provided in the swirler (102) configured to impart a tangential component to a supply of air provided through the swirler (102), the vane (106) including a leading edge and a trailing edge (108);
wherein the trailing edge (108) is arranged at a cut back angle (114) relative to the longitudinal axis (110).

2. The turbine engine (10) of claim 1 wherein the swirler (102) further includes a radially inner wall (120) and a radially outer wall (122) defining an exhaust passage (118).

3. The turbine engine (10) of claim 2 wherein the radially inner wall (120) includes a foot (124).

4. The turbine engine (10) of claim 3 wherein the radially outer wall (122) includes a converging section (126).

5. The turbine engine of claim 4 wherein the converging section (126) is at least partially aligned with the foot (124) in a direction orthogonal to the longitudinal axis (110).

6. The turbine engine (10) of any preceding claim, wherein the cutback angle (114) is less than 90-degrees and is non-zero.

7. The turbine engine (10) of any preceding claim, wherein the fuel nozzle (104) terminates aft of the swirler (102).

8. A fuel nozzle and swirler assembly for an engine, the fuel nozzle and swirler assembly comprising:
a fuel nozzle including a fuel passage defining a longitudinal axis;
a swirler circumscribing the fuel nozzle, and including a forward wall, an aft wall spaced from the forward wall to define a swirler passage therebetween; and
a set of vanes provided in the swirler passage extending between the forward wall and the aft wall, with each vane of the set of vanes extending between a leading edge and a trailing edge;
wherein the trailing edge for each vane of the set of vanes is arranged at a cut back angle relative to the longitudinal axis.

9. The fuel nozzle and swirler assembly of claim 8 wherein the set of vanes defines at least one of an increasing cross-sectional flow area or a decreasing cross-sectional flow area.

10. The fuel nozzle and swirler assembly of any of claims 8 to 9 wherein the set of vanes include the increasing cross-sectional flow area or the decreasing cross-sectional flow area in a direction extending from the forward wall to the aft wall.

11. The fuel nozzle and swirler assembly of any of claims 8 to 9 wherein the set of vanes include the increasing cross-sectional flow area or the decreasing cross-sectional area in a radial direction orthogonal to the direction extending from the forward wall to the aft wall.

12. The fuel nozzle and swirler assembly of any of claims 8 to 11 wherein the set of vanes define both the increasing cross-sectional flow area and the decreasing cross-sectional flow area.

13. The fuel nozzle and swirler assembly of any of claims 8 to 12 wherein the increasing cross-sectional flow area is provided adjacent the forward wall and the decreasing cross-sectional flow area is provided adjacent the aft wall.

14. The fuel nozzle and swirler assembly of any of claims 8 to 13 wherein the swirler further comprises a converging portion arranged downstream of the set of vanes.

15. The fuel nozzle and swirler assembly of claim 14 further comprising a protuberance provided downstream of the converging portion or a damper arranged radially exterior of the converging portion.
